# EUROPÄISCHE PATENTSCHRIFT

(11) **EP 3 012 154 B1**
(45) Veröffentlichungstag und Bekanntmachung des Hinweises auf die Patenterteilung: **02.05.2018**
(21) Anmeldenummer: 15001866.1
(22) Anmeldetag: 24.06.2015
(51) Int. Cl.: B60R 1/00

(54) **VERFAHREN UND VORRICHTUNG ZUR UNTERSTÜTZUNG EINES FAHRERS EINES FAHRZEUG-GESPANNS, INSBESONDERE EINES NUTZFAHRZEUG-GESPANNS**
METHOD AND DEVICE TO SUPPORT A DRIVER OF A VEHICLE COMBINATION, IN PARTICULAR A COMMERCIAL VEHICLE COMBINATION
PROCÉDÉ ET DISPOSITIF D'ASSISTANCE D'UN CONDUCTEUR D'UN ATTELAGE, NOTAMMENT D'UN ATTELAGE DE VÉHICULE UTILITAIRE

(30) Priorität: 23.10.2014 DE 102014015753
(43) Veröffentlichungstag der Anmeldung: 27.04.2016
(73) Patentinhaber: MAN Truck & Bus AG, 80995 München (DE)
(72) Erfinder: Zaindl, Albert, 85302 Gerolsbach (DE)
(74) Vertreter: Liebl, Thomas

(56) Entgegenhaltungen:
- EP-A2- 1 892 150
- DE-A1-102006 026 898
- DE-A1-102010 032 411
- DE-U1-202005 011 042
- US-A- 5 027 200

## Beschreibung

Die Erfindung betrifft ein Verfahren zur Unterstützung eines Fahrers eines Fahrzeug-Gespanns, insbesondere eines Nutzfahrzeug-Gespanns, nach dem Oberbegriff des Patentanspruches 1, eine Vorrichtung zur Unterstützung eines Fahrers eines Fahrzeug-Gespanns, insbesondere eines Nutzfahrzeug-Gespanns, nach dem Oberbegriff des Patentanspruches 3 sowie ein Fahrzeug, insbesondere ein Nutzfahrzeug, zur Durchführung des Verfahrens und/oder mit der Vorrichtung nach Patentanspruch 8. Fahrzeuge, insbesondere Nutzfahrzeuge, weisen üblicherweise mehrere Rückspiegel auf, die einem Fahrer des Fahrzeuges die Sicht auf seitlich neben dem Fahrzeug und hinter dem Fahrzeug liegende Bereiche erleichtern bzw. ermöglichen. Der Rückspiegel kann dabei beispielsweise als Seitenspiegel ausgebildet sein, der außerhalb des Fahrzeugs seitlich außen an einer Fahrzeugseite angeordnet ist und dem Fahrer die Sicht auf ein seitlich neben dem Fahrzeug und hinter dem Fahrer liegendes Seiten-Sichtfeld ermöglicht. Üblicherweise weist ein Fahrzeug dabei auf jeder Fahrzeugseite jeweils wenigstens einen Seitenspiegel auf. Insbesondere bei Nutzfahrzeugen ist es auch bekannt, auf einer Fahrzeugseite mehrere Seitenspiegel anzuordnen. Zudem weisen die Seitenspiegel regelmäßig auch mehrere unterschiedlich ausgebildete Spiegel bzw. Spiegelflächen auf. Des Weiteren wird dem Fahrer eines Fahrzeug-Gespanns, insbesondere eines Nutzfahrzeug-Gespanns, bei einer Kurvenfahrt regelmäßig ein Anhänger/Auflieger des Fahrzeug-Gespanns mittels des Seitenspiegels angezeigt, so dass die Sicht des Fahrers auf die Umgebung deutlich eingeschränkt wird. Weiter kann der Rückspiegel auch als Innenspiegel ausgebildet sein, der im Inneren des Fahrzeugs angeordnet sind und dem Fahrer einen zentralen Blick nach hinten ermöglicht. Diese Innenspiegel eignen sich jedoch nur für Fahrzeuge bzw. Fahrzeug-Gespanne, bei denen eine freie bzw. unverdeckte Sicht nach hinten möglich ist. Bei vielen Fahrzeug-Gespannen, insbesondere bei Nutzfahrzeug-Gespannen, wird die Sicht nach hinten beispielsweise durch den an das Zugfahrzeug gekoppelten Anhänger/Auflieger verdeckt, wodurch bei diesen Fahrzeug-Gespannen regelmäßig auf den Innenspiegel verzichtet wird. Es ist zudem auch bekannt, die Seitenspiegel durch sogenannte Kamera-Monitor-Systeme zumindest teilweise zu ersetzen. Dabei werden anstelle der Seitenspiegel Kameras an den Fahrzeugseiten angeordnet und die mittels der Kameras erfassten Seiten-Sichtfelder mittels eines oder mehrerer Bildschirme dem Fahrer angezeigt. DE 10 2010 032 411 A zeigt ein Verfahren und eine Vorrichtung nach dem Oberbegriff der jeweiligen unabhängigen Ansprüche 1 und 3. Aufgabe der Erfindung ist es, ein Verfahren und eine Vorrichtung bzw. Fahrerassistenzsystem zur Unterstützung eines Fahrers eines Fahrzeug-Gespanns, insbesondere eines Nutzfahrzeug-Gespanns, bereitzustellen, mittels denen die Sicht für den Fahrer während einer Kurvenfahrt auf einfache Weise verbessert wird.

Gemäß Anspruch 1 wird ein Verfahren zur Unterstützung eines Fahrers eines Fahrzeug-Gespanns, insbesondere eines Nutzfahrzeug-Gespanns, vorgeschlagen. Auf diese Weise wird die Sicht für den Fahrer während einer Kurvenfahrt deutlich verbessert, da dem Fahrer nun auch das durch die Kurvenfahrt entstehende Kurven-Sichtfeld angezeigt wird. So kann der Fahrer während einer Kurvenfahrt auch die zentral hinter dem Zugfahrzeug liegenden Bereiche einsehen und der tote Winkel wird deutlich verkleinert. Insbesondere durch die Kombination des Seiten-Sichtfelds mit dem Kurven-Sichtfeld ist nun auch bei einer Kurvenfahrt der tote Winkel äußerst gering. Im Vergleich zu einem Innenspiegel hat die Bild-Erfassungseinrichtung den wesentlichen Vorteil, dass diese beliebig am Fahrzeug-Gespann, insbesondere am Zugfahrzeug, platziert werden kann. So kann die Bild-Erfassungseinrichtung derart platziert werden, dass das Kurven-Sichtfeld bei einer Kurvenfahrt stets mittels der Bild-Erfassungseinrichtung erfasst wird. Dies ist bei vielen Fahrzeug-Gespannen mit dem Innenspiegel nicht möglich. Nach der Erfindung wird das Seiten-Sichtfeld mittels einer Bild-Erfassungseinrichtung, insbesondere einer Kamera, erfasst. Diese Bild-Erfassungseinrichtung ist dann datenübertragend mit einem Bildschirm als Sichtfeld-Anzeigeeinrichtung gekoppelt, mittels dem dem Fahrer das Seiten-Sichtfeld und das Kurven-Sichtfeld angezeigt werden kann. Durch die Erfassung des Seiten-Sichtfelds mittels einer Bild-Erfassungseinrichtung kann beispielsweise die Aerodynamik des Zugfahrzeugs deutlich verbessert werden. Nach der Erfindung ist eine Gierwinkel-Erfassungseinrichtung vorgesehen, mittels der ein relativer Gierwinkel zwischen dem Zugfahrzeug und dem Anhänger/Auflieger bzw. ein bei einer Kurvenfahrt zwischen dem Zugfahrzeug und dem Anhänger/Auflieger entstehender Knickwinkel ermittelt werden kann. Die Gierwinkel-Erfassungseinrichtung ist dabei mit einer Regel- und/oder Steuereinrichtung gekoppelt, mittels der der Bildschirm derart gesteuert wird, dass bis zu einem definierten relativen Gierwinkel nur das Seiten-Sichtfeld mittels des Bildschirms angezeigt wird, und dass bei einem größeren Gierwinkel als der definierte Gierwinkel sowohl das Seiten-Sichtfeld als auch das Kurven-Sichtfeld zumindest teilweise mittels des Bildschirms angezeigt werden. So wird auf einfache Weise sichergestellt, dass dem Fahrer stets die für ihn relevanten Sichtfelder bzw. Sichtfeldbereiche auf dem Bildschirm angezeigt werden. Der definierte relative Gierwinkel ist dabei vorzugsweise derjenige Gierwinkel, bei dem in einem definierten Teilbereich, insbesondere in etwa in der Hälfte, des lediglich das Seiten-Sichtfeld anzeigenden Bildschirms der Anhänger/Auflieger zu sehen ist.
Besonders bevorzugt wird der Bildschirm mittels der Regel- und/oder Steuereinrichtung derart gesteuert, dass bei einem größeren Gierwinkel als der definierte Gierwinkel das Seiten-Sichtfeld auf dem Bildschirm angezeigt wird, wobei zumindest ein Teilbereich des sich in dem Seiten-Sichtfeld befindenden Anhängers/Aufliegers nicht auf dem Bildschirm angezeigt wird, und wobei anstelle dieses Teilbereichs zumindest ein Teil des Kurven-Sichtfelds, insbesondere ein, in Fahrzeug-Längsrichtung gesehen, hinter dem Teilbereich des Anhängers/Aufliegers liegender Teil des Kurven-Sichtfelds, auf dem Bildschirm angezeigt wird. So können die für den Fahrer relevanten Sichtfelder bzw. Sichtfeldbereiche auf einfache und besonders übersichtliche Weise auf dem Bildschirm angezeigt werden.

Zur Lösung der bereits erläuterten Aufgabe wird ferner eine Vorrichtung zur Unterstützung eines Fahrers eines Fahrzeug-Gespanns, insbesondere eines Nutzfahrzeug-Gespanns, im Anspruch 3 beansprucht. Die sich durch die erfindungsgemäße Vorrichtung und einen Teil der darauf rückbezogenen Unteransprüche ergebenden Vorteile sind identisch mit den bereits gewürdigten Vorteilen der erfindungsgemäßen Verfahrensführung, so dass diese hier nicht wiederholt werden. Sofern ein Seiten-Sichtfeld mittels einer Bild-Erfassungseinrichtung erfasst wird, sind vorzugsweise eine erste Bild-Erfassungseinrichtung, insbesondere eine Kamera, zur Erfassung eines, in Fahrzeug-Querrichtung gesehen, auf einer Seite neben dem Zugfahrzeug liegenden ersten Seiten-Sichtfelds und eine zweite Bild-Erfassungseinrichtung, insbesondere eine Kamera, zur Erfassung eines, in Fahrzeug-Querrichtung gesehen, auf der anderen Seite neben dem Zugfahrzeug liegenden zweiten Seiten-Sichtfelds vorgesehen. Der ersten Bild-Erfassungseinrichtung ist dann eine dritte Bild-Erfassungseinrichtung, insbesondere eine Kamera, zur Erfassung des Kurven-Sichtfelds aus einer ersten Perspektive zugeordnet. Der zweiten Bild-Erfassungseinrichtung ist eine vierte Bild-Erfassungseinrichtung, insbesondere eine Kamera, zur Erfassung des Kurven-Sichtfelds aus einer zweiten Perspektive zugeordnet. Diese Bild-Erfassungseinrichtungen sind dabei datenübertragend mit einem Bildschirm als Sichtfeld-Anzeigeeinrichtung gekoppelt, mittels dem dem Fahrer das erste und zweite Seiten-Sichtfeld und das Kurven-Sichtfeld angezeigt werden kann. Auf diese Weise ist der tote Winkel besonders gering, da dem Fahrer sowohl das erste Seiten-Sichtfeld, das zweite Seiten-Sichtfeld als auch das Kurven-Sichtfeld aus zwei unterschiedlichen Perspektiven angezeigt wird. Durch die Anzeige auf einem einzigen Bildschirm können die Sichtfelder dem Fahrer zudem auf besonders einfache und komfortable Weise angezeigt werden.

Vorzugsweise ist die das Kurven-Sichtfeld erfassende Bild-Erfassungseinrichtung im Heckbereich des Zugfahrzeugs, insbesondere im Bereich eines heckseitigen Fahrtrichtungsanzeigers, angeordnet, um das Kurven-Sichtfeld auf einfache Weise zu erfassen. Weiter bevorzugt ist die das Kurven-Sichtfeld erfassende Bild-Erfassungseinrichtung, in Fahrzeug-Querrichtung gesehen, seitlich außen an dem Zugfahrzeug angeordnet, um die Erfassung des Kurven-Sichtfelds noch weiter zu vereinfachen. Bevorzugt ist die das Kurven-Sichtfeld erfassende Bild-Erfassungseinrichtung zudem, in Fahrzeug-Längsrichtung x gesehen, nach ausgerichtet, um das Kurven-Sichtfeld zu erfassen.
Besonders bevorzugt ist die das Seiten-Sichtfeld erfassende Bild-Erfassungseinrichtung und/oder der das Seiten-Sichtfeld anzeigende Seitenspiegel, in Fahrzeug-Querrichtung gesehen, gegenüberliegend zu der ihr bzw. ihm zugeordneten, das Kurven-Sichtfeld erfassenden Bild-Erfassungseinrichtung seitlich außen am Zugfahrzeug angeordnet. So kann der tote Winkel bei einer Kurvenfahrt besonders gering gehalten werden.

Ferner wird auch ein Fahrzeug gemäß Anspruch 8, insbesondere in Nutzfahrzeug, zur Durchführung des erfindungsgemäßen Verfahrens und/oder mit der erfindungsgemäßen Vorrichtung beansprucht. Die sich daraus ergebenden Vorteile sind identisch mit den bereits gewürdigten Vorteilen des erfindungsgemäßen Verfahrens und der erfindungsgemäßen Vorrichtung, so dass diese an dieser Stelle nicht wiederholt werden.
Die vorstehend erläuterten und/oder den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen, einzeln oder aber auch in beliebiger Kombination miteinander zur Anwendung kommen.
Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Darstellung von vorne eine ein Zugfahrzeug eines als Nutzfahrzeug-Gespann ausgebildeten Fahrzeug-Gespanns;
- Fig. 2: in einer schematischen Darstellung von oben das Nutzfahrzeug-Gespann bei einer Geradeausfahrt;
- Fig. 3: in einer Darstellung gemäß Fig. 2 das Nutzfahrzeug-Gespann bei einer Kurvenfahrt;
- Fig. 4: eine erste Anzeige auf einem Bildschirm für einen Fahrer des Nutzfahrzeug-Gespanns;
- Fig. 5: eine zweite Anzeige auf dem Bildschirm;
- Fig. 6: in einer Darstellung von vorne eine zweite Ausführungsform des Zugfahrzeugs;
- Fig. 7: in einer schematischen Darstellung von oben ein Fahrzeug-Gespann bei einer Geradeausfahrt; und
- Fig. 8: in einer Darstellung gemäß Fig. 7 das Fahrzeug-Gespann bei einer Kurvenfahrt.

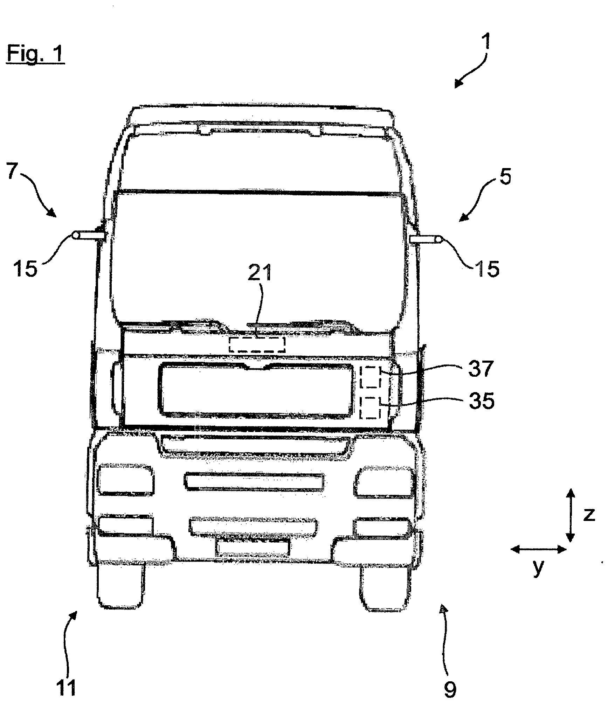

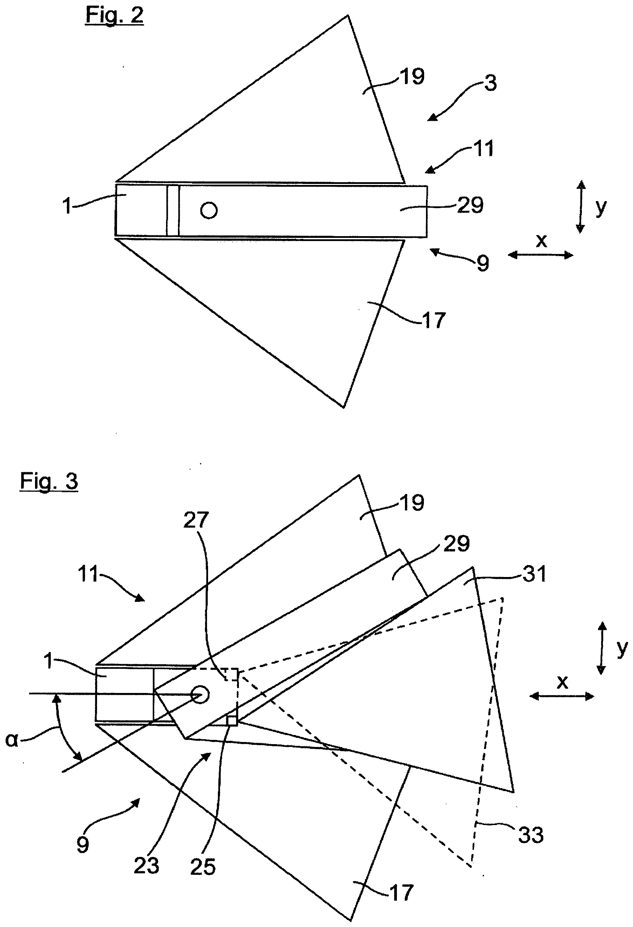

In Fig. 1 ist ein Zugfahrzeug 1 eines als Nutzfahrzeug-Gespann 3 ausgebildeten Fahrzeug-Gespanns (Fig. 3) gezeigt. Das Zugfahrzeug 1 weist mehrere, hier beispielhaft zwei, Kameraarme 5, 7 auf. Die Kameraarme 5, 7 sind hier, in Fahrzeug-Hochrichtung z gesehen, auf gleicher Höhe am Zugfahrzeug 1 angeordnet. Der Kameraarm 5 ist dabei, in Fahrzeug-Querrichtung y gesehen, seitlich außen an einer Seite 9 des Zugfahrzeugs 1 festgelegt und ragt seitlich nach außen von dem Zugfahrzeug 1 ab. Der Kameraarm 7 ist, in Fahrzeug-Querrichtung y gesehen, seitlich außen an der anderen Seite 11 des Zugfahrzeugs 1 festgelegt und ragt ebenfalls seitlich nach außen von dem Zugfahrzeug 1 ab. Jeder Kameraarm 5, 7 weist an seinem freien Endbereich eine Kamera 15 auf. Mittels der Kamera 15 des Kameraarms 5 kann dabei ein, in Fahrzeug-Querrichtung y gesehen, auf der Seite 9 seitlich neben dem Nutzfahrzeug-Gespann 3 (Fig. 2) und, in Fahrzeug-Längsrichtung x gesehen, hinter dem Fahrer des Nutzfahrzeug-Gespanns 3 liegendes Seiten-Sichtfeld 17 (Fig. 2) erfasst werden. Mittels der Kamera 15 des Kameraarms 7 kann ein, in Fahrzeug-Querrichtung y gesehen, auf der Seite 11 seitlich neben dem Nutzfahrzeug-Gespann 3 (Fig. 2) und, in Fahrzeug-Längsrichtung x gesehen, hinter dem Fahrer des Nutzfahrzeug-Gespanns 3 liegendes Seiten-Sichtfeld 19 (Fig. 2) erfasst werden.

Des Weiteren sind die Kameras 15 der Kameraarme 5, 7 hier mit einem in Fig. 1 mit gestrichelten Linien angedeuteten Bildschirm 21 des Zugfahrzeugs 1 datenübertragend gekoppelt bzw. verbunden. Mittels des Bildschirms 21 können die mittels der Kameras 15 erfassten Seiten-Sichtfelder 17, 19 dem Fahrer des Nutzfahrzeug-Gespanns 3 angezeigt werden. Weiter weist das Zugfahrzeug 1 auch mehrere, hier beispielhaft zwei, im Heckbereich 23 des Zugfahrzeugs 1 angeordnete Kameras 25, 27 (Fig. 3) auf. Die Kamera 25 ist dabei, in Fahrzeug-Querrichtung y gesehen, auf der Seite 9 seitlich außen im Bereich eines in den Figuren nicht gezeigten ersten heckseitigen Fahrtrichtungsanzeigers an dem Zugfahrzeug 1 angeordnet. Die Kamera 27 ist, in Fahrzeug-Querrichtung y gesehen, auf der zweiten Seite 11 seitlich außen im Bereich eines ebenfalls in den Figuren nicht gezeigten zweiten heckseitigen Fahrtrichtungsanzeigers am Zugfahrzeug 1 angeordnet. Die Kameras 25, 27 sind zudem, in Fahrzeug-Längsrichtung x gesehen, nach hinten ausgerichtet.

Auf diese Weise kann beispielsweise mittels der Kamera 25 bei einer Kurvenfahrt des Nutzfahrzeug-Gespanns 3 in Richtung der Seite 11, wie dies in Fig. 3 gezeigt ist, ein großer Teil eines, in Fahrzeug-Längsrichtung x gesehen, hinter dem Zugfahrzeug 1 liegendes, seitlich von dem Seiten-Sichtfeld 17 und einem Anhänger/Auflieger 29 des Nutzfahrzeug-Gespanns 3 begrenztes Kurven-Sichtfeld 31 erfasst werden. Ebenso kann mittels der Kamera 27 bei einer Kurvenfahrt des Nutzfahrzeug-Gespanns 3 in Richtung der Seite 9 ein in Fig. 3 mit gestrichelten Linien angedeutetes Kurven-Sichtfeld 33 erfasst werden. Die mittels der Kameras 25, 27 erfassbaren Kurven-Sichtfelder 31, 33 sind dabei, in Fahrzeug-Längsrichtung x gesehen, nicht durch die Länge des Anhängers/Aufliegers 29 begrenzt, sondern können, wie dies in Fig. 3 gezeigt ist, auch weit hinter den Anhänger/Auflieger 29 hinausragen. Des Weiteren sind auch die Kameras 25, 27 datenübertragend mit dem Bildschirm 21 gekoppelt, so dass die mittels der Kameras 25, 27 erfassten Kurven-Sichtfelder 31, 33 mittels des Bildschirms 21 dem Fahrer des Nutzfahrzeug-Gespanns 3 angezeigt werden können.

Wie in Fig. 1 weiter gezeigt ist, weist das Zugfahrzeug 1 auch eine mit gestrichelten Linien angedeutete Gierwinkel-Erfassungseinrichtung 35 auf, mittels der ein relativer Gierwinkel α (Fig. 3) zwischen dem Zugfahrzeug 1 und dem Anhänger/Auflieger 29 erfasst werden kann. Die Gierwinkel-Erfassungseinrichtung 35 ist mit einer in Fig. 1 ebenfalls mit gestrichelten Linien angedeuteten Regel- und/oder Steuereinrichtung 37 datenübertragend gekoppelt, so dass der mittels der Gierwinkel-Erfassungseinrichtung 35 ermittelte aktuelle Gierwinkel α zwischen dem Zugfahrzeug 1 und dem Anhänger/Auflieger 29 an die Regel- und/oder Steuereinrichtung 37 übermittelt wird. Die Regel- und/oder Steuereinrichtung 37 ist signalübertragend mit dem Bildschirm 21 des Zugfahrzeugs 1 gekoppelt. Auf diese Weise wird die Anzeige des Bildschirmes 21 mittels der Regel- und/oder Steuereinrichtung 37 gesteuert.

Die Regel- und/oder Steuereinrichtung 37 steuert die Anzeige des Bildschirms 21 hier beispielhaft derart, dass bis zu einem definierten relativen Gierwinkel α nur die Seiten-Sichtfelder 17, 19 mittels des Bildschirms 21 angezeigt werden. Bei einem größeren relativen Gierwinkel α als der definierte relative Gierwinkel α werden die Seiten-Sichtfelder 17, 19 weiter auf dem Bildschirm 21 angezeigt, wobei jedoch ein Teilbereich des sich in den Seiten-Sichtfeldern 17, 19 befindenden Anhängers/Aufliegers 29 nicht auf dem Bildschirm 21 angezeigt wird, und wobei anstelle dieses Teilbereichs ein, in Fahrzeug-Längsrichtung x gesehen, hinter dem Teilbereich des Anhängers/Aufliegers 29 liegender Teil der Kurven-Sichtfelder 31, 33 auf dem Bildschirm 21 angezeigt wird. Bei einer Kurvenfahrt in Richtung der Seite 11 wird dabei der hinter dem Teilbereich des Anhängers/Aufliegers 29 liegende Teil das Kurven-Sichtfelds 31 auf dem Bildschirm 21 angezeigt. Bei einer Kurvenfahrt in Richtung der Seite 9 wird der hinter dem Teilbereich des Anhängers/Aufliegers 29 liegende Teil das Kurven-Sichtfelds 33 auf dem Bildschirm 21 angezeigt.

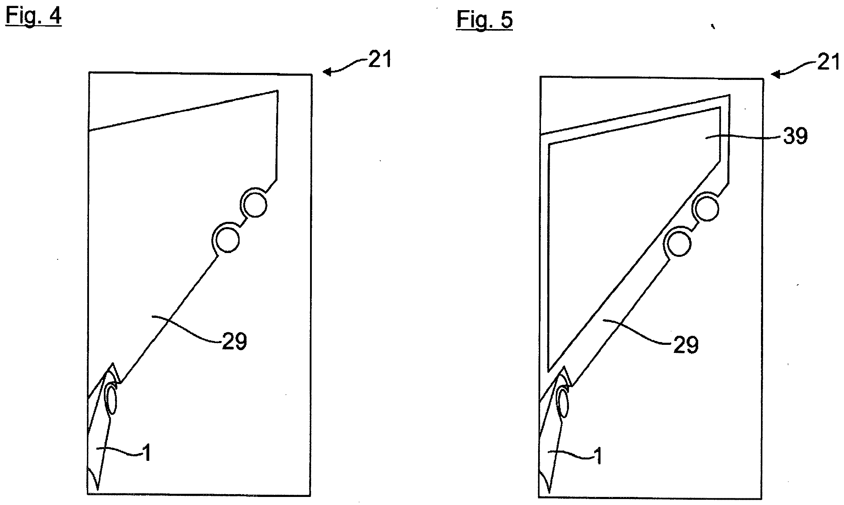

In Fig. 4 ist beispielhaft das auf dem Bildschirm 21 angezeigte Seiten-Sichtfeld 17 bei einer Kurvenfahrt in Richtung der Seite 9 und einem geringeren relativen Gierwinkel α als der definierte relative Gierwinkel α gezeigt. Hier ist wird der Anhänger/Auflieger 29 vollständig bzw. ohne Ausschnitt auf dem Bildschirm 21 angezeigt. In Fig. 5 ist das auf dem Bildschirm 21 angezeigte Seiten-Sichtfeld 17 bei einer Kurvenfahrt in Richtung der Seite 9 und einem größeren relativen Gierwinkel α als der definierte relative Gierwinkel α gezeigt. Dabei wird ein Teilbereich 39 des sich in den Seiten-Sichtfeldern 17, 19 befindenden Anhängers/Aufliegers 29 nicht auf dem Bildschirm 21 angezeigt. Anstelle des Teilbereichs 39 wird hier ein, in Fahrzeug-Längsrichtung x gesehen, hinter dem Teilbereich 39 des Anhängers/Aufliegers 29 liegender Teil des Kurven-Sichtfelds 33 auf dem Bildschirm 21 angezeigt.

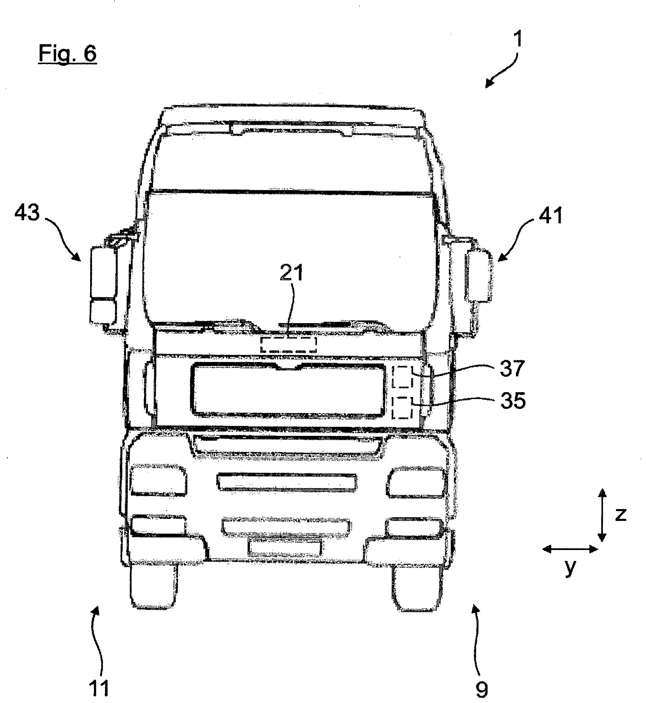

In Fig. 6 ist das Zugfahrzeug 1 des Nutzfahrzeug-Gespanns 3 in einer zweiten Ausführungsform gezeigt. Das Zugfahrzeug 1 weist hier, im Vergleich zu der in Fig. 1 gezeigten Ausführungsform, anstelle der Kameraarme 5, 7 Seitenspiegel 41, 43 auf. Auf dem Bildschirm 21 können hier somit nur die mittels der Kameras 25, 27 erfassten Kurven-Sichtfelder 31, 33 angezeigt werden. Der Bildschirm 21 wird mittels der Regel- und/oder Steuereinrichtung 37 hier derart gesteuert, dass bis zu dem definierten relativen Gierwinkel α die Kurven-Sichtfelder 31, 33 nicht mittels des Bildschirms 21 angezeigt werden. Bei einem größeren relativen Gierwinkel α als der definierte Gierwinkel α werden die Kurven-Sichtfelder 31, 33 dann angezeigt.

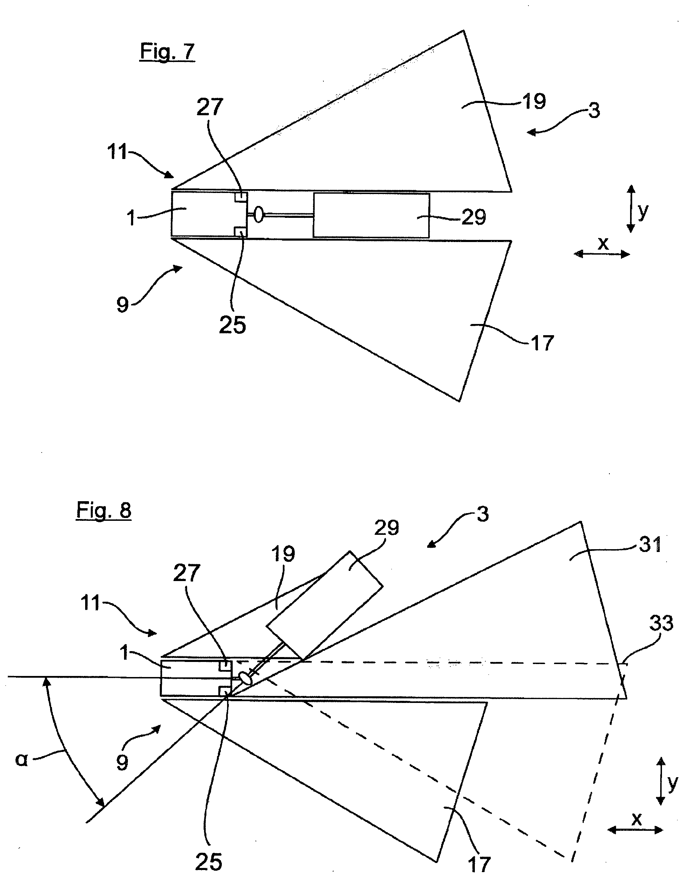

In den Fig. 7 und 8 ist eine zweite Ausführungsform des Fahrzeug-Gespanns 3 gezeigt, wobei das Fahrzeug-Gespann 3 hier jedoch nicht als Nutzfahrzeug-Gespann ausgebildet ist. Das hier gezeigte Fahrzeug-Gespann 3 weist ebenfalls das erfindungsgemäße System auf.

### Bezugszeichenliste

- 1: Zugfahrzeug
- 3: Nutzfahrzeug-Gespann
- 5: Kameraarm
- 7: Kameraarm
- 9: Seite
- 11: Seite
- 15: Kamera
- 17: Seiten-Sichtfeld
- 19: Seiten-Sichtfeld
- 21: Bildschirm
- 23: Heckbereich
- 25: Kamera
- 27: Kamera
- 29: Anhänger/Auflieger
- 31: Kurven-Sichtfeld
- 33: Kurven-Sichtfeld
- 35: Gierwinkel-Erfassungseinrichtung
- 37: Regel- und/oder Steuereinrichtung
- 39: Teilbereich
- 41: Seitenspiegel
- 43: Seitenspiegel
- α: Gierwinkel

## Patentansprüche

1. Verfahren zur Unterstützung eines Fahrers eines Fahrzeug-Gespanns, insbesondere eines Nutzfahrzeug-Gespanns, wobei das Fahrzeug-Gespann (3) ein Zugfahrzeug (1) und wenigstens einen mit dem Zugfahrzeug (1) gekoppelten Anhänger/Auflieger (29) aufweist,
wobei das Zugfahrzeug (1) eine Sichtfeld-Anzeigeeinrichtung (21, 41, 43) aufweist, mittels der dem Fahrer des Fahrzeug-Gespanns (3) ein, in Fahrzeug-Querrichtung (y) gesehen, auf einer ersten Seite (9) seitlich neben dem Fahrzeug-Gespann (3) und, in Fahrzeug-Längsrichtung (x) gesehen, hinter dem Fahrer liegendes erstes Seiten-Sichtfeld (17) anzeigbar ist, und mittels der dem Fahrer des Fahrzeug-Gespanns (3) ein, in Fahrzeug-Querrichtung (y) gesehen, auf einer der ersten Seite (9) gegenüberliegenden zweiten Seite (11) seitlich neben dem Fahrzeug-Gespann (3) und, in Fahrzeug-Längsrichtung (x) gesehen, hinter dem Fahrer liegendes zweites Seiten-Sichtfeld (19) anzeigbar ist,
wobei eine Bild-Erfassungseinrichtung (25), insbesondere eine Kamera, vorgesehen ist, mittels der bei einer Kurvenfahrt des Fahrzeug-Gespanns (3) in Richtung der dem ersten Seiten-Sichtfeld (17) gegenüberliegenden zweiten Seite (11) ein hinter dem Zugfahrzeug (1) liegendes, seitlich von dem ersten Seiten-Sichtfeld (17) und dem Anhänger/Auflieger (29) begrenztes Kurven-Sichtfeld (31) zumindest teilweise erfasst wird, wobei die Bild-Erfassungseinrichtung (25) datenübertragend mit einem Bildschirm (21) gekoppelt ist, mittels dem dem Fahrer das erfasste Kurven-Sichtfeld (31) angezeigt wird,
wobei das erste und zweite Seiten-Sichtfeld (17, 19) jeweils mittels einer Bild-Erfassungseinrichtung (15), insbesondere einer Kamera, erfasst wird, wobei diese Bild-Erfassungseinrichtungen (15) datenübertragend mit dem Bildschirm (21) als Sichtfeld-Anzeigeeinrichtung gekoppelt ist, mittels dem dem Fahrer das erste und zweite Seiten-Sichtfeld (17, 19) und das Kurven-Sichtfeld (31) anzeigbar sind,
wobei eine Gierwinkel-Erfassungseinrichtung (35) vorgesehen ist, mittels der ein relativer Gierwinkel (α) zwischen dem Zugfahrzeug (1) und dem Anhänger/Auflieger (29) ermittelbar ist, **dadurch gekennzeichnet,**
**dass** die Gierwinkel-Erfassungseinrichtung (35) mit einer Regel- und/oder Steuereinrichtung (37) gekoppelt ist, mittels der der Bildschirm (21) derart gesteuert wird, dass bis zu einem definierten relativen Gierwinkel (α) nur das erste und zweite Seiten-Sichtfeld (17, 19) mittels des Bildschirms (21) angezeigt werden, und dass bei einem größeren Gierwinkel (α) als der definierte Gierwinkel (α) sowohl das erste und zweite Seiten-Sichtfeld (17, 19) als auch das Kurven-Sichtfeld (31) zumindest teilweise mittels des Bildschirms (21) angezeigt werden.

2. Verfahren nach Anspruch 1, **dadurch gekennzeichnet, dass** der Bildschirm (21) mittels der Regel- und/oder Steuereinrichtung (37) derart gesteuert wird, dass bei einem größeren Gierwinkel (α) als der definierte Gierwinkel (α) das erste und zweite Seiten-Sichtfeld (17, 19) auf dem Bildschirm (21) angezeigt werden, wobei zumindest ein Teilbereich (39) des sich in den Seiten-Sichtfeldern (17, 19) befindenden Anhängers/Aufliegers (29) nicht auf dem Bildschirm (21) angezeigt wird, und wobei anstelle dieses Teilbereichs (39) zumindest ein Teil des Kurven-Sichtfelds (31), insbesondere ein, in Fahrzeug-Längsrichtung (x) gesehen, hinter dem Teilbereich (39) des Anhänger/Aufliegers (29) liegender Teil des Kurven-Sichtfelds (31), auf dem Bildschirm (21) angezeigt wird.

3. Vorrichtung zur Unterstützung eines Fahrers eines Fahrzeug-Gespanns, insbesondere eines Nutzfahrzeug-Gespanns, wobei das Fahrzeug-Gespann (3) ein Zugfahrzeug (1) und wenigstens einen mit dem Zugfahrzeug (1) gekoppelten Anhänger/Auflieger (29) aufweist,
wobei das Zugfahrzeug (1) eine Sichtfeld-Anzeigeeinrichtung (21, 41, 43) aufweist, mittels der dem Fahrer des Fahrzeug-Gespanns (3) ein, in Fahrzeug-Querrichtung (y) gesehen, auf einer ersten Seite (9) seitlich neben dem Fahrzeug-Gespann (3) und, in Fahrzeug-Längsrichtung (x) gesehen, hinter dem Fahrer liegendes erstes Seiten-Sichtfeld (17) anzeigbar ist, und mittels der dem Fahrer des Fahrzeug-Gespanns (3) ein, in Fahrzeug-Querrichtung (y) gesehen, auf einer der ersten Seite (9) gegenüberliegenden zweiten Seite (11) seitlich neben dem Fahrzeug-Gespann (3) und, in Fahrzeug-Längsrichtung (x) gesehen, hinter dem Fahrer liegendes zweites Seiten-Sichtfeld (19) anzeigbar ist,
wobei eine Bild-Erfassungseinrichtung (25), insbesondere eine Kamera, vorgesehen ist, mittels der bei einer Kurvenfahrt des Fahrzeug-Gespanns (3) in Richtung der dem ersten Seiten-Sichtfeld (17) gegenüberliegenden zweiten Seite (11) ein hinter dem Zugfahrzeug (1) liegendes, seitlich von dem ersten Seiten-Sichtfeld (17) und dem Anhänger/Auflieger (29) begrenztes Kurven-Sichtfeld (31) zumindest teilweise erfassbar ist, wobei die Bild-Erfassungseinrichtung (25) datenübertragend mit einem Bildschirm (21) gekoppelt ist, mittels dem dem Fahrer das erfasste Kurven-Sichtfeld (31) angezeigt wird,
wobei das erste und zweite Seiten-Sichtfeld (17, 19) jeweils mittels einer Bild-Erfassungseinrichtung (15), insbesondere einer Kamera, erfassbar ist, wobei diese Bild-Erfassungseinrichtungen (15) datenübertragend mit dem Bildschirm (21) als Sichtfeld-Anzeigeeinrichtung gekoppelt ist, mittels dem dem Fahrer das erste und zweite Seiten-Sichtfeld (17, 19) und das Kurven-Sichtfeld (31) anzeigbar sind, wobei eine Gierwinkel-Erfassungseinrichtung (35) vorgesehen ist, mittels der ein relativer Gierwinkel (α) zwischen dem Zugfahrzeug (1) und dem Anhänger/Auflieger (29) ermittelbar ist, **dadurch gekennzeichnet,**
**dass** die Gierwinkel-Erfassungseinrichtung (α) mit einer Regel- und/oder Steuereinrichtung (37) gekoppelt ist, mittels der der Bildschirm (21) derart steuerbar ist, dass bis zu einem definierten relativen Gierwinkel (α) nur das erste und zweite Seiten-Sichtfeld (17, 19) mittels des Bildschirms (21) anzeigbar ist, und dass bei einem größeren Gierwinkel (α) als der definierte Gierwinkel (α) sowohl das erste und zweite Seiten-Sichtfeld (17, 19) als auch das Kurven-Sichtfeld (31) zumindest teilweise mittels des Bildschirms (21) anzeigbar sind.

4. Vorrichtung nach Anspruch 3, **dadurch gekennzeichnet, dass** der Bildschirm (21) mittels der Regel- und/oder Steuereinrichtung (37) derart steuerbar ist, dass bei einem größeren Gierwinkel (α) als der definierte Gierwinkel (α) das erste und zweite Seiten-Sichtfeld (17, 19) auf dem Bildschirm (21) anzeigbar ist, wobei zumindest ein Teilbereich (39) des sich in dem ersten und zweiten Seiten-Sichtfeld (17, 19) befindenden Anhängers/Aufliegers (29) nicht auf dem Bildschirm (21) anzeigbar ist, und wobei anstelle dieses Teilbereichs (39) zumindest ein Teil des Kurven-Sichffelds (31), insbesondere ein, in Fahrzeug-Längsrichtung (x) gesehen, hinter dem Teilbereich (39) des Anhänger/Aufliegers (29) liegender Teil des Kurven-Sichtfelds (31), auf dem Bildschirm (21) anzeigbar ist.

5. Vorrichtung nach Anspruch 3 oder 4, **dadurch gekennzeichnet, dass** eine erste Bild-Erfassungseinrichtung (15), insbesondere eine Kamera, zur Erfassung des ersten Seiten-Sichtfelds (17) vorgesehen ist, dass eine zweite Bild-Erfassungseinrichtung (15), insbesondere eine Kamera, zur Erfassung des zweiten Seiten-Sichtfelds (19) vorgesehen ist, dass der ersten Bild-Erfassungseinrichtung (15) eine dritte Bild-Erfassungseinrichtung (27), insbesondere eine Kamera, zur Erfassung des Kurven-Sichtfelds (33) aus einer ersten Perspektive zugeordnet ist, dass der zweiten Bild-Erfassungseinrichtung (15) eine vierte Bild-Erfassungseinrichtung (25), insbesondere eine Kamera, zur Erfassung des Kurven-Sichtfelds (31) aus einer zweiten Perspektive zugeordnet ist, und dass diese Bild-Erfassungseinrichtungen (15, 25, 27) datenübertragend mit einem Bildschirm (21) als Sichtfeld-Anzeigeeinrichtung gekoppelt sind, mittels dem dem Fahrer das erste und zweite Seiten-Sichtfeld (17, 19) und das Kurven-Sichtfeld (31, 33) anzeigbar sind.

6. Vorrichtung nach einem der Ansprüche 3 bis 5, **dadurch gekennzeichnet, dass** die das Kurven-Sichtfeld (31, 33) erfassende Bild-Erfassungseinrichtung (25, 27) im Heckbereich (23) des Zugfahrzeugs (1), insbesondere im Bereich eines heckseitigen Fahrtrichtungsanzeigers, angeordnet ist, und/oder dass die das Kurven-Sichtfeld (31, 33) erfassende Bild-Erfassungseinrichtung (25, 27), in Fahrzeug-Querrichtung (y) gesehen, seitlich außen an dem Zugfahrzeug (1) angeordnet ist, und/oder dass die das Kurven-Sichtfeld (31, 33) erfassende Bild-Erfassungseinrichtung (25, 27), in Fahrzeug-Längsrichtung (x) gesehen, nach hinten ausgerichtet ist.

7. Vorrichtung nach Anspruch 5 und 6, **dadurch gekennzeichnet, dass** die das erste Seiten-Sichtfeld (17) erfassende Bild-Erfassungseinrichtung (15), in Fahrzeug-Querrichtung (y) gesehen, gegenüberliegend zu der zugeordneten, das Kurven-Sichtfeld (33) erfassenden Bild-Erfassungseinrichtung (27) seitlich außen am Zugfahrzeug (1) angeordnet ist, und dass die das zweite Seiten-Sichtfeld (19) erfassende Bild-Erfassungseinrichtung (15), in Fahrzeug-Querrichtung (y) gesehen, gegenüberliegend zu der zugeordneten, das Kurven-Sichtfeld (31) erfassenden Bild-Erfassungseinrichtung (27) seitlich außen am Zugfahrzeug (1) angeordnet ist.

8. Fahrzeug-Gespann mit einer Vorrichtung nach einem der Ansprüche 3 bis 7.

## Claims

1. Method for assisting a driver of a vehicle-trailer combination, in particular of a commercial vehicle-trailer combination, wherein the vehicle-trailer combination (3) comprises a tractor vehicle (1) and at least one trailer/semi-trailer (29) coupled to the tractor vehicle (1),
wherein the tractor vehicle (1) comprises a field of view display device (21, 41, 43), by means of which a first lateral field of view (17) lying on a first side (9) laterally adjacent to the vehicle-trailer combination (3) when viewed in the vehicle's lateral direction (y) and lying behind the driver when viewed in the vehicle's longitudinal direction (x) can be displayed to the driver of the vehicle-trailer combination (3), and by means of which a second lateral field of view (19) lying on a second side (11) laterally adjacent to the vehicle-trailer combination (3) and opposite the first side (9) when viewed in the vehicle's lateral direction (y) and lying behind the driver when viewed in the vehicle's longitudinal direction (x) can be displayed to the driver of the vehicle-trailer combination (3),
wherein an image acquisition device (25), in particular a camera, is provided, by means of which, during a turn of the vehicle-trailer combination (3) in the direction of the second side (11) opposite the first lateral field of view (17), a field of view of the turn (31) lying behind the tractor vehicle (1) and laterally restricted by the first lateral field of view (17) and the trailer/semi-trailer (29) is at least partly recorded, wherein the image acquisition device (25) is coupled for data transmission to a display screen (21), by means of which the recorded field of view of the turn (31) is displayed to the driver, wherein the first and second lateral field of view (17, 19) is in each case recorded by means of an image acquisition device (15), in particular a camera, wherein said image acquisition devices (15) is coupled for data transmission to the display screen (21) as the field of view display device, by means of which the first and second lateral field of view (17, 19) and the field of view of the turn (31) can be displayed to the driver, wherein a yaw angle detection device (35) is provided, by means of which a relative yaw angle (α) between the tractor vehicle (1) and the trailer/semi-trailer (29) can be determined, **characterized**
**in that** the yaw angle detection device (35) is coupled to a regulating and/or control device (37), by means of which the display screen (21) is controlled such that up to a defined relative yaw angle (α) only the first and second lateral field of view (17, 19) are displayed by means of the display screen (21), and that for a larger yaw angle (α) than the defined yaw angle (α) both the first and second lateral field of view (17, 19) and also the field of view of the turn (31) are at least partly displayed by means of the display screen (21).

2. Method according to Claim 1, **characterized in that** the display screen (21) is controlled by means of the regulating and/or control device (37) such that for a larger yaw angle (α) than the defined yaw angle (α) the first and second lateral field of view (17, 19) are displayed on the display screen (21), wherein at least a sub region (39) of the trailer/semi-trailer (29) that is located in the lateral fields of view (17, 19) is not displayed on the display screen (21), and wherein instead of said sub region (39) at least a part of the field of view of the turn (31), in particular a part of the field of view of the turn (31) lying behind the sub region (39) of the trailer/semi-trailer (29) when viewed in the vehicle's longitudinal direction (x), is displayed on the display screen (21).

3. Apparatus for assisting a driver of a vehicle-trailer combination, in particular of a commercial vehicle-trailer combination, wherein the vehicle-trailer combination (3) comprises a tractor vehicle (1) and at least one trailer/semi-trailer (29) coupled to the tractor vehicle (1),
wherein the tractor vehicle (1) comprises a field of view display device (21, 41, 43), by means of which a first lateral field of view (17) lying on a first side (9) that is laterally adjacent to the vehicle-trailer combination (3) when viewed in the vehicle's lateral direction (y) and lying behind the driver when viewed in the vehicle's longitudinal direction (x) can be displayed to the driver of the vehicle-trailer combination (3), and by means of which a second lateral field of view (19) lying on a second side (11) laterally adjacent to the vehicle-trailer combination (3) and opposite the first side (9) when viewed in the vehicle's lateral direction (y) and lying behind the driver when viewed in the vehicle's longitudinal direction (x) can be displayed to the driver of the vehicle-trailer combination (3),
wherein an image acquisition device (25), in particular a camera, is provided, by means of which during a turn of the vehicle-trailer combination (3) in the direction of the second side (11) opposite the first lateral field of view (17), a field of view of the turn (31) lying behind the tractor vehicle (1) and laterally restricted by the first lateral field of view (17) and the trailer/semi-trailer (29) can be at least partly recorded, wherein the image acquisition device (25) is coupled for data transmission to a display screen (21), by means of which the recorded field of view of the turn (31) is displayed to the driver, wherein the first and second lateral field of view (17, 19) can in each case be recorded by means of an image acquisition device (15), in particular a camera, wherein said image acquisition devices (15) is coupled for data transmission to the display screen (21) as the field of view display device, by means of which the first and second lateral field of view (17, 19) and the field of view of the turn (31) can be displayed to the driver, wherein a yaw angle detection device (35) is provided, by means of which a relative yaw angle (α) between the tractor vehicle (1) and the trailer/semi-trailer (29) can be determined, **characterized**
**in that** the yaw angle detection device (α) is coupled to a regulating and/or control device (37), by means of which the display screen (21) can be controlled such that up to a defined relative yaw angle (α) only the first and second lateral field of view (17, 19) can be displayed by means of the display screen (21), and that for a larger yaw angle (α) than the defined yaw angle (α) both the first and second lateral field of view (17, 19) and also the field of view of the turn (31) can be at least partly displayed by means of the display screen (21).

4. Apparatus according to Claim 3, **characterized in that** the display screen (21) can be controlled by means of the regulating and/or control device (37) such that for a larger yaw angle (α) than the defined yaw angle (α) the first and second lateral field of view (17, 19) can be displayed on the display screen (21), wherein at least a sub region (39) of the trailer/semi-trailer (29) located in the first and second lateral field of view (17, 19) cannot be displayed on the display screen (21), and wherein instead of said sub region (39) at least a part of the field of view of the turn (31), in particular a part of the field of view of the turn (31) lying behind the sub region (39) of the trailer/semi-trailers (29) when viewed in the vehicle's longitudinal direction (x), can be displayed on the display screen (21).

5. Apparatus according to Claim 3 or 4, **characterized in that** a first image acquisition device (15), in particular a camera, is provided for recording the first lateral field of view (17), that a second image acquisition device (15), in particular a camera, is provided for recording the second lateral field of view (19), that a third image acquisition device (27), in particular a camera, for recording the field of view of the turn (33) from a first perspective is associated with the first image acquisition device (15), that a fourth image acquisition device (25), in particular a camera, for recording the field of view of the turn (31) from a second perspective is associated with the second image acquisition device (15), and that said image acquisition devices (15, 25, 27) are coupled for data transmission to a display screen (21) as the field of view display device, by means of which the first and second lateral fields of view (17, 19) and the fields of view of the turn (31, 33) can be displayed to the driver.

6. Apparatus according to any one of Claims 3 to 5, **characterized in that** the image acquisition device (25, 27) that is recording the field of view of the turn (31, 33) is disposed in the rear region (23) of the tractor vehicle (1), in particular in the region of a rear direction indicator, and/or that the image acquisition device (25, 27) that is recording the field of view of the turn (31, 33) is disposed laterally externally on the tractor vehicle (1) when viewed in the vehicle's lateral direction (y) and/or that the image acquisition device (25, 27) that is recording the field of view of the turn (31, 33) is directed rearwards when viewed in the vehicle's longitudinal direction (x).

7. Apparatus according to Claims 5 and 6, **characterized in that** the image acquisition device (15) that is recording the first lateral field of view (17), when viewed in the vehicle's lateral direction (y), is disposed laterally externally on the tractor vehicle (1) and opposite to the associated image acquisition device (27) that is recording the field of view of the turn (33), and that the image acquisition device (15) that is recording the second lateral field of view (19), when viewed in the vehicle's lateral direction (y), is disposed laterally externally on the tractor vehicle (1) and opposite to the associated image acquisition device (27) that is recording the field of view of the turn (31).

8. Vehicle-trailer combination with an apparatus according to any one of Claims 3 to 7.

## Revendications

1. Procédé d'assistance à un conducteur d'un attelage, notamment d'un attelage de véhicule utilitaire, dans lequel l'attelage (3) présente un véhicule tracteur (1) et au moins une remorque/semi-remorque (29) couplée au véhicule tracteur (1),
dans lequel le véhicule tracteur (1) présente un dispositif d'affichage du champ de vision (21, 41, 43), au moyen duquel un premier champ de vision latéral (17) situé, en considérant la direction transversale (y) du véhicule, sur un premier côté (9) latéralement à côté de l'attelage (3) et, en considérant la direction longitudinale (x) du véhicule, derrière le conducteur, peut être affiché à l'intention du conducteur de l'attelage (3), et au moyen duquel un deuxième champ de vision latéral (19) situé, en considérant la direction transversale (y) du véhicule, sur un deuxième côté (11) opposé au premier côté (9) latéralement à côté de l'attelage (3) et, en considérant la direction longitudinale (x) du véhicule, derrière le conducteur, peut être affiché à l'intention du conducteur de l'attelage (3),
dans lequel il est prévu un dispositif de détection d'image (25), en particulier une caméra, au moyen duquel, lors d'un virage de l'attelage (3) en direction du deuxième côté (11) opposé au premier champ de vision latéral (17), on détecte au moins en partie un champ de vision en courbe (31) situé derrière le véhicule tracteur (1) et limité latéralement par le premier champ de vision latéral (17) et la remorque/semi-remorque (29), dans lequel le dispositif de détection d'image (25) est couplé en transmission de données à un écran (21), au moyen duquel on affiche à l'intention du conducteur le champ de vision en courbe détecté (31),
dans lequel on détecte le premier et le deuxième champs de vision latéraux (17, 19) respectivement au moyen d'un dispositif de détection d'image (15), en particulier d'une caméra, dans lequel ces dispositifs de détection d'image (15) est couplé en transmission de données à l'écran (21) en tant que dispositif d'affichage du champ de vision, au moyen duquel le premier et le deuxième champs de vision latéraux (17, 19) et le champ de vision en courbe (31) peuvent être affichés à l'intention du conducteur,
dans lequel il est prévu un dispositif de détection d'angle de lacet (35), au moyen duquel un angle de lacet relatif (α) entre le véhicule tracteur (1) et la remorque/semi-remorque (29) peut être déterminé,
**caractérisé en ce que** le dispositif de détection d'angle de lacet (35) est couplé à un dispositif de régulation et/ou de commande (37), au moyen duquel on commande l'écran (21) de telle manière que, jusqu'à un angle de lacet relatif (α) défini, seuls le premier et le deuxième champs de vision latéraux (17, 19) soient affichés au moyen de l'écran (21) et que, pour un angle de lacet relatif (α) plus élevé que l'angle de lacet (α) défini, aussi bien le premier et le deuxième champs de vision latéraux (17, 19) que le champ de vision en courbe (31) soient affichés au moins en partie au moyen de l'écran (21).

2. Procédé selon la revendication 1, **caractérisé en ce que** l'on commande l'écran (21) au moyen du dispositif de régulation et/ou de commande (37), de telle manière que pour un angle de lacet (α) plus élevé que l'angle de lacet (α) défini le premier et le deuxième champs de vision latéraux (17, 19) soient affichés sur l'écran (21), dans lequel au moins une région partielle (39) de la remorque/semi-remorque (29) se trouvant dans les champs de vision latéraux (17, 19) n'est pas affichée sur l'écran (21), et dans lequel au lieu de cette région partielle (39), on affiche sur l'écran (21) au moins une partie du champ de vision en courbe (31), en particulier une partie du champ de vision en courbe (31) située derrière la région partielle (39) de la remorque/semi-remorque (29), en considérant la direction longitudinale (x) du véhicule.

3. Dispositif d'assistance à un conducteur d'un attelage, notamment d'un attelage de véhicule utilitaire, dans lequel l'attelage (3) présente un véhicule tracteur (1) et au moins une remorque/semi-remorque (29) couplée au véhicule tracteur (1),
dans lequel le véhicule tracteur (1) présente un dispositif d'affichage du champ de vision (21, 41, 43), au moyen duquel un premier champ de vision latéral (17) situé, en considérant la direction transversale (y) du véhicule, sur un premier côté (9) latéralement à côté de l'attelage (3) et, en considérant la direction longitudinale (x) du véhicule, derrière le conducteur, peut être affiché à l'intention du conducteur de l'attelage (3), et au moyen duquel un deuxième champ de vision latéral (19) situé, en considérant la direction transversale (y) du véhicule, sur un deuxième côté (11) opposé au premier côté (9) latéralement à côté de l'attelage (3) et, en considérant la direction longitudinale (x) du véhicule, derrière le conducteur, peut être affiché à l'intention du conducteur de l'attelage (3),
dans lequel il est prévu un dispositif de détection d'image (25), en particulier une caméra, au moyen duquel, lors d'un virage de l'attelage (3) en direction du deuxième côté (11) opposé au premier champ de vision latéral (17), on détecte au moins en partie un champ de vision en courbe (31) situé derrière le véhicule tracteur (1) et limité latéralement par le premier champ de vision latéral (17) et la remorque/semi-remorque (29), dans lequel le dispositif de détection d'image (25) est couplé en transmission de données à un écran (21), au moyen duquel on affiche à l'intention du conducteur le champ de vision en courbe détecté (31),
dans lequel le premier et le deuxième champs de vision latéraux (17, 19) peuvent être détectés respectivement au moyen d'un dispositif de détection d'image (15), en particulier d'une caméra, dans lequel ces dispositifs de détection d'image (15) est couplé en transmission de données à l'écran (21) en tant que dispositif d'affichage du champ de vision, au moyen duquel le premier et le deuxième champs de vision latéraux (17, 19) et le champ de vision en courbe (31) peuvent être affichés à l'intention du conducteur, dans lequel il est prévu un dispositif de détection d'angle de lacet (35), au moyen duquel un angle de lacet relatif (α) entre le véhicule tracteur (1) et la remorque/semi-remorque (29) peut être déterminé,
**caractérisé en ce que** le dispositif de détection d'angle de lacet (35) est couplé à un dispositif de régulation et/ou de commande (37), au moyen duquel l'écran (21) peut être commandé de telle manière que, jusqu'à un angle de lacet relatif (α) défini, seuls le premier et le deuxième champs de vision latéraux (17, 19) puissent être affichés au moyen de l'écran (21) et que, pour un angle de lacet relatif (α) plus élevé que l'angle de lacet (α) défini, aussi bien le premier et le deuxième champs de vision latéraux (17, 19) que le champ de vision en courbe (31) puissent être affichés au moins en partie au moyen de l'écran (21).

4. Dispositif selon la revendication 3, **caractérisé en ce que** l'écran (21) peut être commandé au moyen du dispositif de régulation et/ou de commande (37), de telle manière que pour un angle de lacet (α) plus élevé que l'angle de lacet (α) défini le premier et le deuxième champs de vision latéraux (17, 19) puissent être affichés sur l'écran (21), dans lequel au moins une région partielle (39) de la remorque/semi-remorque (29) se trouvant dans les champs de vision latéraux (17, 19) ne peut pas être affichée sur l'écran (21), et dans lequel au lieu de cette région partielle (39), au moins une partie du champ de vision en courbe (31), en particulier une partie du champ de vision en courbe (31) située derrière la région partielle (39) de la remorque/semi-remorque (29), en considérant la direction longitudinale (x) du véhicule, peut être affichée sur l'écran (21).

5. Dispositif selon la revendication 3 ou 4, **caractérisé en ce qu'**il est prévu un premier dispositif de détection d'image (15), en particulier une caméra, pour la détection d'un premier champ de vision latéral (17), **en ce qu'**il est prévu un deuxième dispositif de détection d'image (15), en particulier une caméra, pour la détection d'un deuxième champ de vision latéral (19), **en ce qu'**un troisième dispositif de détection d'image (27), en particulier une caméra, est associé au premier dispositif de détection d'image (15) pour la détection du champ de vision en courbe (33) dans une première perspective, **en ce qu'**un quatrième dispositif de détection d'image (25), en particulier une caméra, est associé au deuxième dispositif de détection d'image (15) pour la détection du champ de vision en courbe (31) dans une deuxième perspective, et **en ce que** ces dispositifs de détection d'image (15, 25, 27) sont couplés en transmission de données à un écran (21) en tant que dispositif d'affichage du champ de vision, au moyen duquel le premier et le deuxième champs de vision latéraux (17, 19) et le champ de vision en courbe (31, 33) peuvent être affichés à l'intention du conducteur.

6. Dispositif selon l'une quelconque des revendications 3 à 5, **caractérisé en ce que** le dispositif de détection d'image (25, 27) détectant le champ de vision en courbe (31, 33) est disposé dans la région arrière (23) du véhicule tracteur (1), en particulier dans la région d'un indicateur de direction arrière, et/ou **en ce que** le dispositif de détection d'image (25, 27) détectant le champ de vision en courbe (31, 33) est disposé, en considérant la direction transversale (y) du véhicule, latéralement vers l'extérieur sur le véhicule tracteur (1), et/ou **en ce que** le dispositif de détection d'image (25, 27) détectant le champ de vision en courbe (31, 33) est orienté vers l'arrière, en considérant la direction longitudinale (x) du véhicule.

7. Dispositif selon la revendication 5 et 6, **caractérisé en ce que** le dispositif de détection d'image (15) détectant le premier champ de vision latéral (17) est disposé, en considérant la direction transversale (y) du véhicule, latéralement vers l'extérieur sur le véhicule tracteur (1), en face du dispositif de détection d'image associé (27) détectant le champ de vision en courbe (33), et **en ce que** le dispositif de détection d'image (15) détectant le deuxième champ de vision latéral (19) est disposé, en considérant la direction transversale (y) du véhicule, latéralement vers l'extérieur sur le véhicule tracteur (1), en face du dispositif de détection d'image associé (27) détectant le champ de vision en courbe (31).

8. Attelage équipé d'un dispositif selon l'une quelconque des revendications 3 à 7.
